# EUROPÄISCHE PATENTANMELDUNG

(11) **EP 2 698 701 A2**
(43) Veröffentlichungstag der Anmeldung: **19.02.2014**
(21) Anmeldenummer: 13168250.2
(22) Anmeldetag: 17.05.2013
(51) Int. Cl.: G06F 3/0488, A01D 41/00, G06F 3/0481

(54) **Anzeigenvorrichtung für Landmaschinen**

(30) Priorität: 17.08.2012 DE 102012107552
(71) Anmelder: CLAAS Selbstfahrende Erntemaschinen GmbH, 33428 Harsewinkel (DE)
(72) Erfinder: Grevinga, Markus, 48369 Saerbeck (DE); Losch, Michael, 33775 Versmold (DE)

(57) **Zusammenfassung**

Die Erfindung betrifft eine elektronische Bedien- und Anzeigeeinheit (8) mit zumindest einem einen Touchscreen-Monitor (21) umfassenden Display (18) und wenigstens einer Bedieneinheit (22, 23), wobei das Display (18) über eine Vielzahl Visualisierungsinhalte (58) umfassende Visualisierungsbereiche (32, 33, 37, 38, 46, 47) verfügt und der dem Display (18) zugeordnete Touchscreen-Monitor (21) in Visualisierungsbereiche (32, 33, 37, 38, 46, 47) unterteilt ist, wobei die Visualisierungsinhalte (58) jedes Visualisierungsbereichs (32, 33, 37, 38, 46, 47) unabhängig von den Visualisierungsinhalten (58) der übrigen Visualisierungsbereiche (32, 33, 37, 38, 46, 47) mittels verfügbarer Touchscreen-Funktionen (59) editierbar sind.

## Beschreibung

Die Erfindung betrifft eine elektronische Bedien- und Anzeigeeinheit mit einem als Touchscreen-Monitor ausgeführten Display und wenigstens einer Bedieneinheit nach dem Oberbegriff des Anspruchs 1.

Aus dem Stand der Technik sind eine Vielzahl von gattungsgemäßen Anzeigeeinrichtungen bekannt geworden, die zur Visualisierung und Editierung von Prozessen, etwa auf mobilen landwirtschaftlichen Arbeitsmaschinen eingesetzt werden. So ist beispielsweise aus der DE 102 03 370 ein Verfahren zur Steuerung einer Bedienoberfläche bekannt, bei der eine interaktive Bedienoberfläche eine Visualisierung einer Vielzahl von Bedienfenstern ermöglicht. Neben der an sich bekannten überlappenden Darstellung von Anzeigefenstern wird dort vorgeschlagen, dass bei Aktivierung eines weiteren Anzeigefensters das bereits aktivierte Anzeigefenster so verkleinert wird, dass der Inhalt aller aktiven Anzeigefenster sichtbar ist. Derartige Systeme haben vor allem den Nachteil, dass eine Vielzahl von Informationen unmittelbar am Bildschirm auch dann visualisiert sind, wenn deren momentane Überwachung oder Editierung nicht erforderlich ist. Diese Vielzahl von Informationen kann beim Bediener der Maschine auch zu einer Art Reizüberflutung führen, da stets eine erhebliche Anzahl von Informationen zugänglich ist und der Bediener selbst eine Priorisierung vornehmen und berücksichtigen muss, um die wichtigen von den weniger wichtigen Informationen zu unterscheiden. Zudem fällt die Orientierung auf einem derart strukturierten Display schwer, da sich die Bildschirmstruktur ständig ändert.

Aus der EP 1 650 715 ist ein Anzeigeverfahren bekannt geworden, bei dem hinzutretende neue, für den jeweiligen Prozess notwendige Informationen in einem Randbereich eines Displays visualisiert werden, während maschinenübergreifende zuvor alleine auf dem Monitor visualisierte Informationen in der Weise gezoomt werden, dass sie weiterhin ablesbar sind, die neuen Information aber in einem gut zugänglichen und damit leichter editierbaren äußeren Bereich des Displays positioniert sind. Obgleich eine so strukturierte Visualisierungseinrichtung eine bessere Orientierung auf dem Bildschirm sicherstellt, haben auch derartige Systeme den Nachteil, dass die Vielzahl der visualisierten Informationen mitunter für den laufenden Prozess nicht erforderlich sind und damit zu einer unnötigen Reizüberflutung des die jeweilige landwirtschaftliche Arbeitsmaschine bedienenden Fahrers führen können.

Es ist deshalb Aufgabe der Erfindung, die beschriebenen Nachteile des Standes der Technik zu vermeiden und insbesondere eine Visualisierungseinrichtung vorzuschlagen, die jeweils nur kontextrelevante Parameter visualisiert und das schnelle Navigieren zwischen verschiedenen Menüebenen durch Nutzung geeigneter Touchscreen-Funktionen möglich wird.

Diese Aufgabe wird erfindungsgemäß durch die kennzeichnenden Merkmale des Anspruchs 1 gelöst.

Indem der dem Display der elektronischen Bedien- und Anzeigeneinheit zugeordnete Touchscreen-Monitor in Visualisierungsbereiche unterteilt ist und die Visualisierungsinhalte jedes Visualisierungsbereichs unabhängig von den Visualisierungsinhalten der übrigen Visualisierungsbereiche mittels verfügbarer Touchscreen-Funktionen editierbar sind wird sichergestellt, dass zunächst nur kontextrelevante Parameter visualisiert werden und zudem ein schnelles Navigieren zwischen verschiedenen Menüebenen durch Nutzung geeigneter Touchscreen-Funktionen möglich wird.

In einer vorteilhaften Weiterbildung der Erfindung kann die Sichtbarkeit einzelner Visualisierungsbereiche vorallem dadurch verbessert werden, dass ein oder mehrere Visualisierungsbereiche unabhängig von den übrigen Visualisierungsbereichen zoombar sind.

Damit rechts- und linksseitige Ansichten von landwirtschaftlichen Arbeitsmaschinen einfach und schnell auf dem Display darstellbar sind, ist in einer vorteilhaften Ausgestaltung der Erfindung vorgesehen, dass ein oder mehrere Visualisierungsbereiche eine Vielzahl von visualisierten Ikons umfassen und eine zweifingrige eine kreisförmige Bewegung beschreibende Berührung des Touchscreen-Monitors zu einer spiegelbildlichen Darstellung des jeweiligen Ikons führt, wobei die ursprüngliche Darstellung des Ikons erhalten bleibt.

Maschinenparameterabhängig können die am Display angezeigten Visualisierungsbereiche derart umfangreiche Informationen enthalten, dass es nicht sinnvoll oder möglich ist, diese zugleich am Display zu visualisieren. Damit nun auch zwischen diesen umfangreichen Informationen zügig navigiert werden kann, wird in einer weiteren vorteilhaften Ausgestaltung der Erfindung vorgeschlagen, dass ein zweifingeriges horizontales oder vertikales Scrollen des jeweiligen Visualisierungsbereichs eine Erhöhung der Scroll-Geschwindigkeit in dem jeweiligen Visualisierungsbereich bewirkt. Sehr flexibel lässt sich diese Art der Navigation dann einsetzen, wenn das zweifingrige horizontale oder vertikale Scrollen in gleichzeitig visualisierten Visualisierungsbereichen unabhängig voneinander erfolgen kann.

Indem die elektronische Bedien- und Anzeigeeinheit zumindest ein Display mit einer Vielzahl von Visualisierungsbereichen umfasst und in Navigationsebenen betreibbar ist, wobei das Display innerhalb einer Navigationsebene in Visualisierungsbereiche unterteilt ist und zumindest ein Teil der Visualisierungsbereiche relativ zueinander bewegbar sind, wird sichergestellt, dass jeweils nur kontextrelevante Parameter visualisiert werden und die Visualisierung nach wiederkehrendem Muster zur schnellen Orientierung des Bedieners in den Navigationsebenen führt. Indem in diesem Zusammenhang die Bewegbarkeit der Visualisierungsbereiche relativ zueinander ein horizontales und/oder vertikales Scrollen des jeweiligen Visualisierungsbereiches umfasst, wird der Bediener hier mit einer effizienten, weit verbreiteten Navigationsstruktur konfrontiert, die einfach beherrschbar ist und schnell zu dem auf dem Display auszuwählenden Parameter führt.

Indem das Display in einer weiteren vorteilhaften Ausgestaltung der Erfindung in einer ersten Navigationsebene zumindest einen Visualisierungsbereich "Arbeitsphase" und einen Visualisierungsbereich "Tool-Menü" umfasst, wobei der Visualisierungsbereich "Arbeitsphase" horizontal scrollbar und der Visualisierungsbereich "Tool-Menü" vertikal scrollbar ist kann der Bediener auf einen Blick erfassen, welches die verfügbaren Werkzeuge und welches die verfügbaren Arbeitsumgebungen sind, auf die sich die verfügbaren Werkzeuge beziehen.

Damit der Bediener permanent und unterbewusst wahrnimmt in welcher Navigationsebene gerade navigiert wird, ist die Displaystruktur in einer weiteren vorteilhaften Ausgestaltung zudem so beschaffen, dass eine zweite Navigationsebene zumindest einen Visualisierungsbereich "Tool Content", einen Visualisierungsbereich "Tool-Menü" sowie einen Visualisierungsbereich "Tool-Submenü" umfasst und alle Visualisierungsbereiche vertikal scrollbar sind. Aufgrund dessen, dass in dieser Navigationsebene ausschließlich ein vertikales Scrollen möglich ist, erkennt der Nutzer unmittelbar an der Art der Bedienung in welcher Menüebene gerade navigiert wird.

Ein schnelles Rückgängigmachen oder Beenden eines gewählten Werkzeugs kann in einer zweckmäßigen Ausgestaltung dadurch erreicht werden, dass ein Berühren eines aktivierten Visualisierungsbereichs außerhalb eines den Visualisierungsbereich beschreibenden Ikons zum Schließen eines aktivierten Menüfensters führt und/oder ein Rücksetzen von durchgeführten Änderungen bewirkt.

Damit der Bediener die Displaystruktur optimal an seine Bedürfnisse anpassen kann ist in einer weiteren vorteilhaften Ausgestaltung der Erfindung vorgesehen, dass die Konfiguration des Displays in zumindest einer der verfügbaren Navigationsebenen editierbar ist. Im einfachsten Fall kann diese freie Konfigurierbarkeit sichergestellt werden, indem in der jeweiligen Navigationsebene die verfügbaren Visualisierungsbereiche eine Vielzahl konfigurierbarer Teilbereiche umfassen und wobei jeder der Teilbereiche in der Weise editierbar ist, das der Inhalt eines in einem Visualisierungsbereich hinterlegten Werkzeugs in den jeweiligen Teilbereich ziehbar ist.

Ein schnelles Schließen von geöffneten Pop-up Fenstern wird in einer vorteilhaften Ausgestaltung dadurch bewirkt, dass in dem Display ein oder mehrere Pop-up Fenster geöffnet sind und das zweifingrige horizontale Ziehen eines geöffneten Pop-up Fensters das Schließen dieses Pop-up Fensters bewirkt.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine als Mähdrescher ausgeführte landwirtschaftliche Arbeitsmaschine, die erfindungsgemäße Bedien- und Anzeigeeinheit umfassend
- Figur 2: eine schematische Darstellung der erfindungsgemäßen Bedien- und Anzeigeeinheit in verschiedenen Navigationsebenen
- Figur 3: das Navigieren in einer ersten Navigationsebene
- Figur 4: das Ändern der Displaystruktur in einer Navigationsebene
- Figur 5: eine schematische Darstellung von Funktionen zur Aktivierung eines Touchscreen-Monitors

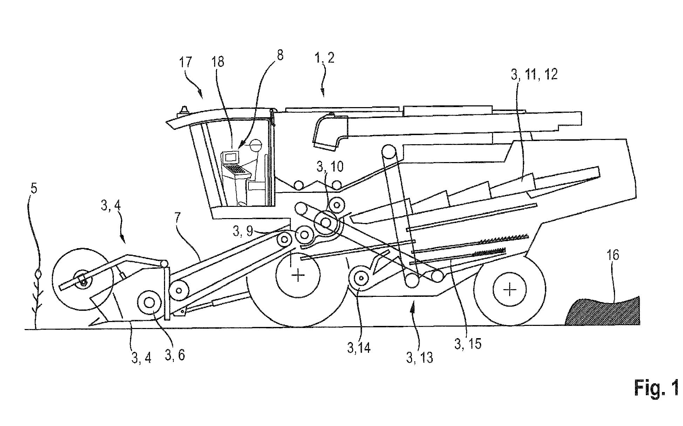

Figur 1 zeigt eine beispielhaft als Mähdrescher 2 ausgeführte landwirtschaftliche Arbeitsmaschine 1 und deren Arbeitsaggregate 3. In seinem frontseitigen Bereich nimmt der Mähdrescher 2 ein Schneidwerk 4 auf, welches das Erntegut 5 annimmt, schneidet und mittels eines Förderorgans 6 an den nachgeordneten Schrägförderer 7 übergibt. Über den Schrägförderer 7 wird das Erntegut 5 in an sich bekannter Weise an die Dreschorgane, die vorliegend aus einer ersten Dreschtrommel 9 und einer dieser nachgeordneten zweiten Dreschtrommel 10 bestehen, übergeben. Zur weiteren Abscheidung der Körner wird der Gutstrom an eine Trenneinrichtung 11, wie beispielsweise einen Hordenschüttler 12, sowie an eine Reinigungseinrichtung 13, die im wesentlichen aus einem Gebläse 14 und Reinigungssieben 15 besteht, gefördert, bevor das Stroh aus dem rückwärtigen Bereich des Mähdreschers 2 heraus gefördert und beispielsweise auf dem Feldboden in einem Schwad 16 abgelegt oder breitverteilt wird. Über eine in der Kabine 17 angeordnete im folgenden näher zu beschreibende erfindungsgemäße elektronische Bedien- und Anzeigeeinheit 8 kann der Fahrer des Mähdreschers 2 in an sich bekannter Weise Einstellungen der unterschiedlichen Arbeitsaggregate 3 vornehmen und auf diese Weise die Erntefahrt den spezifischen Erntegutbedingungen anpassen. Darüber hinaus hat der Fahrer des Mähdreschers 2 stets einen Überblick über die auf dem Display 18 der in der Kabine 17 angeordneten Bedien- und Anzeigeeinheit 8 visualisierten Maschinen- und/oder Erntegutdaten. In Bezug auf die hier dargestellte, als Mähdrescher 2 ausgeführte landwirtschaftliche Arbeitsmaschine 1 liegt es im Rahmen der Erfindung, dass die landwirtschaftliche Arbeitsmaschine 1 auch als beliebige landwirtschaftliche Arbeitsmaschine, etwa als Feldhäcksler oder Traktor ausgeführt sein kann.

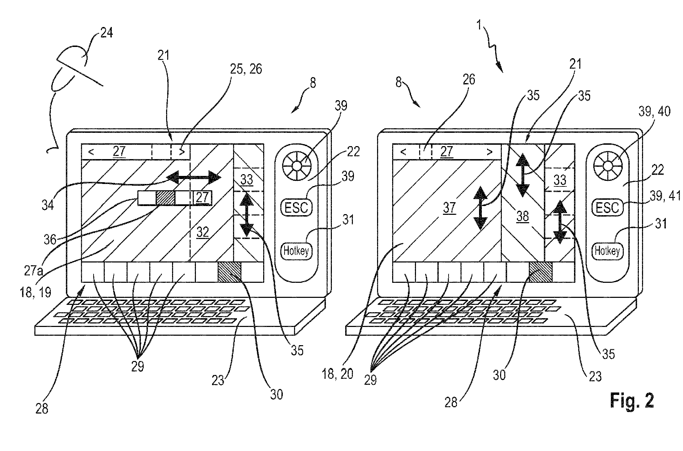

Figur 2 zeigt eine schematische Darstellung der erfindungsgemäßen Bedien- und Anzeigeeinheit 8, wobei die linke Darstellung die noch näher zu beschreibende erste Navigationsebene 19 und die rechte Darstellung die ebenfalls noch näher zu beschreibende zweite Navigationsebene 20 des der Bedien- und Anzeigeeinheit 8 zugeordneten Displays 18 darstellt. Die Bedien- und Anzeigeeinheit 8 umfasst neben dem als Touchscreen-Monitor 21 ausgeführten Display 18 eine erste Bedieneinheit 22, die ein Navigieren innerhalb einer Menüebene 19, 20 ermöglicht sowie zumindest eine weitere Bedieneinheit 23 mittels derer Eingaben durch den Bediener 24 vorgenommen werden können. Es liegt im Rahmen der Erfindung, dass die ersten und zweiten Bedieneinheiten 22, 23 in nicht dargestellter Weise in einer einzigen Bedieneinheit zusammengefasst sein können. Das als Touchscreen-Monitor 21 ausgeführte Display 18 verfügt in seinem obenseitigen Bereich über einen als sogenannte Header-Menüleiste 25 ausgeführten Anzeigebereich 26, der permanent zumindest in der ersten Navigationsebenen 19 sichtbar ist. Die Header-Menüleiste 25 umfasst die noch näher zu beschreibenden Arbeitsphasen 27 der landwirtschaftlichen Arbeitsmaschine 1, wobei jede der Arbeitsphasen 27 durch horizontales Scrollen der Header-Menüleiste 25 vom Betreiber 24 der landwirtschaftlichen Arbeitsmaschine 1 via Touchscreen-Funktion durch horizontales Ziehen der Header-Menüleiste 25 auswählbar ist.

Am untenseitigen Rand des Displays 18 ist diesem ein weiterer, in allen verfügbaren Navigationsebenen 19, 20 sichtbarer Anzeigebereich 28 zugeordnet, der einen Anzeigebereich "Favoriten" 29 sowie einen Anzeigebereich "Hotkey" 30 umfasst, wobei in noch näher zu beschreibender Weise im Anzeigebereich "Favoriten" 29 dauerhaft system relevante Informationen visualisiert werden und im Anzeigenbereich "Hotkey" 30 navigationsebenenrelevante Informationen durch Aktivierung des jeweiligen Anzeigenbereichs 29 visualisierbar sind. Die in dem Button "Hotkey" 30 hinterlegten navigationsebenenrelevanten Informationen können entweder durch Berühren dieses Buttons auf dem als Touchscreen-Monitor 21 ausgeführten Display 18 oder durch Drücken der in der ersten Bedieneinheit 22 angeordneten Taste "Hotkey" 31 aktiviert werden.

Das erfindungsgemäß in Navigationsebenen 19, 20 betreibbare Display 18 umfasst in einer ersten Navigationsebene 19 zumindest einen Visualisierungsbereich "Arbeitsphase" 32 sowie einen Visualisierungsbereich "Tool-Menü" 33, wobei der Bediener 24 der landwirtschaftlichen Arbeitsmaschine 1 durch horizontales Scrollen 34 im Visualisierungsbereich "Arbeitsphase" 32 und vertikales Scrollen 35 im Visualisierungsbereich "Tool-Menü" 33 in dem jeweiligen Visualisierungsbereich 32, 33 navigieren kann. Da das Display 18 als Touchscreen-Monitor 21 ausgeführt ist wird das horizontale und vertikale Scrollen 34, 35 durch Berührung des Display 18 und das Ziehen des jeweiligen Visualisierungsbereichs 32, 33 in der gewünschten Richtung bewirkt. Damit der Bediener 24 während des Scrollens im Visualisierungsbereich "Arbeitsphase" 32 über die jeweils gerade aktivierte Arbeitsphase 32 informiert ist, wird ein weiteres Anzeigefeld 36 am Display 18 eingeblendet, welches alle wählbaren Arbeitsphasen 27 anzeigt, wobei die jeweils aktivierte Arbeitsphase 27a hervorgehoben visualisiert wird.

In der erfindungsgemäßen weiteren Navigationsebene 20 umfasst das Display 18 zumindest einen Visualisierungsbereich "Tool Content" 37, den Visualisierungsbereich "Tool-Menü" 33 sowie einen Visualisierungsbereich "Tool-Submenü" 38, wobei in jedem dieser Visualisierungsbereiche 33, 37, 38 durch vertikales Scrollen 35 navigiert werden kann. In analoger Weise zur ersten Navigationsebene 19 wird das vertikale Scrollen 35 durch Berührung des Displays 18 und das Ziehen des jeweiligen Visualisierungsbereichs 33, 37, 38 in die gewünschte Richtung bewirkt. Darüber hinaus ist in der zweiten Navigationsebene 20 das Navigieren zwischen den Visualisierungsbereichen 33, 37,38 und innerhalb jedes Visualisierungsbereichs 33, 37, 38 mittels der ersten Bedieneinheit 22 zugeordneten Bedienelementen 39 möglich. Im dargestellten Ausführungsbeispiel verfügt die erste Bedieneinheit 22 über ein als Dreh-Druck-Schalter 40 ausgeführtes Bedienelement 39 bei dessen Drehung zwischen den Visualisierungsbereichen 33, 37, 38 hin und her geschaltet und innerhalb eines Visualisierungsbereiches 33, 37,38 navigiert werden kann, wobei die Drücken-Funktion des Dreh-Druck-Schalters 40 jeweils zur Bestätigung oder Auswahl einer gewählten Funktion dient. Mittels des als Escape-Taste 41 ausgeführten weiteren Bedienelementes 39 kann eine mit dem Dreh-Druck-Schalter 40 vorgenommene Editierung zurückgesetzt werden.

Indem das Display 18 in den beschriebenen ersten und zweiten Navigationsebenen 19, 20 betreibbar ist, wobei das Display 18 innerhalb einer Navigationsebene 19, 20 in Visualisierungsbereiche 32, 33, 37, 38 unterteilt ist und zumindest ein Teil der Visualisierungsbereiche 32, 33, 37, 38 relativ zueinander bewegbar sind, wird eine Navigationsmöglichkeit geschaffen, die dem Bediener 24 der landwirtschaftlichen Arbeitsmaschine 1 ein schnelles und zudem übersichtliches Ändern von Maschinenparametern ermöglicht. Die Orientierung innerhalb der verfügbaren Navigationsebenen 19, 20 wird auch dadurch noch erhöht, dass nur in einer ersten Navigationsebene 19 ein horizontales Scrollen 34 möglich ist während in der zumindest einen weiteren Navigationsebene 20 ausschließlich ein vertikales Scrollen 35 realisierbar ist. Dies hat vor allem den Effekt, dass der Bediener 24 der landwirtschaftlichen Arbeitsmaschine bereits an der Bewegung der Visualisierungsbereiche 32, 33, 37, 38 erkennt, in welcher Navigationsebene 19, 20 gerade navigiert wird.

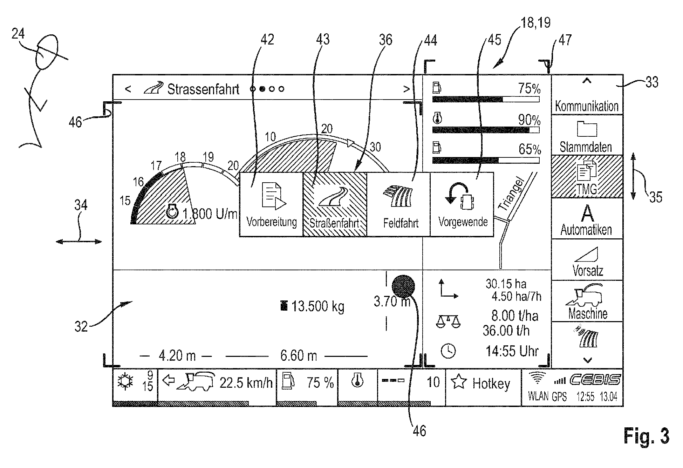

Figur 3 zeigt eine Detailansicht des Displays 18 in der ersten Navigationsebene 19. Das die verfügbaren Arbeitsphasen visualisierende Anzeigefeld 36 umfasst die Arbeitsphasen "Vorbereitung" 42, "Straßenfahrt" 43, "Feldfahrt" 44 und "Vorgewende" 45. Der Visualisierungsbereich jeder Arbeitsphase 42-45 ist so strukturiert, dass er einen Visualisierungsbereich "Arbeitsphasen-Content" 46 und zumindest einen Visualisierungsbereich "Tool-View" 47 umfasst. In der ersten Navigationsebene 19 kann der Bediener 24 durch Berührung 48 des Displays 18 mit dem Finger oder einem geeigneten Gegenstand die gewünschte Arbeitsphase 42-45 wählen indem er entweder den Visualisierungsbereich "Arbeitsphase" 32 in horizontaler Richtung 34 scrollt oder die gewünschten Arbeitsphasen 42-45 unmittelbar in dem zusätzlichen Anzeigefeld 36 antippt. Unabhängig davon, kann der Bediener 24 in der ersten Navigationsebene 19 in dem Visualisierungsbereich "Tool-Menü" 33 in noch näher zu beschreibender Weise durch vertikales Scrollen 35 in diesem Navigieren.

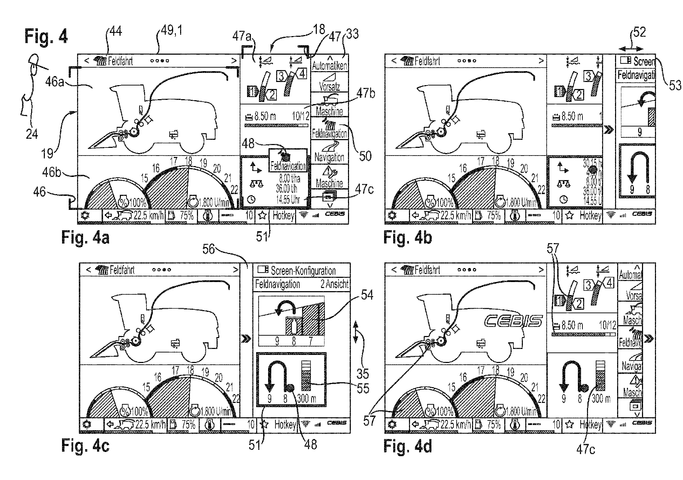

Figur 4 zeigt am Beispiel einer als selbstfahrender Feldhäcksler 49 ausgeführten landwirtschaftlichen Arbeitsmaschine 1 das Ändern der Struktur des Displays 18 in der ersten Navigationsebene 19. Obgleich die Änderung der Displaystruktur nachfolgend anhand der ersten Navigationsebene 19 beschrieben wird liegt es im Rahmen der Erfindung, dass die zu beschreibende Prozedur in analoger Weise auch zur Änderung der Displaystruktur in der zweiten Navigationsebene 20 anwendbar ist, sodass aus Vereinfachungsgründen auf eine Beschreibung dieser Prozedur verzichtet wird. Im dargestellten Ausführungsbeispiel wurde vom Bediener 24 des Feldhäckslers 49 die Arbeitsphase "Feldfahrt" 44 ausgewählt. Jeder der Visualisierungsbereiche "Arbeitsphasen-Content" 46 und "Tool-View" 47 sind in Teilbereiche 46a-b, 47 a-c untergliedert, wobei die in den Teilbereichen 46a-b, 47a-c visualisierten Informationen teilbereichsweise austauschbar sind. Die Editierung erfolgt in der Weise, dass der Bediener 24 zunächst durch Berührung 48 aus dem Visualisierungsbereich "Tool-Menü" 33 ein Werkzeug 50, hier das Werkzeug "Feldnavigation", auswählt und in einen der Teilbereiche 46a-b, 47a-c der Visualisierungsbereiche "Arbeitsphasen-Content" 46 oder "Tool-View" 47 zieht.

Im dargestellt Ausführungsbeispiel wird das Werkzeug "Feldnavigation" 50 in den untersten Teilbereich 47c des Visualisierungsbereichs "Tool-View" 47 gezogen, wobei die Aktivierung des Teilbereichs 47c durch einen farblich hervorgehobenen Rand 51 signalisiert wird. Unterbricht der Bediener 24 in diesem Teilbereich 47c die Berührung öffnet sich ein von rechts nach links in horizontaler Richtung 52 in das Display eingeschobenes Pop-up Fenster 53, welches im vorliegenden Fall zwei alternative Editieroptionen 54, 55 für das Werkzeug "Feldnavigation" 50 umfasst. Indem der Bediener 24 durch Berührung 48 eine der alternativen Editieroptionen 54, 55 aus dem den Visualisierungsbereich "Tool-View" 47 vollständig überdeckenden Pop-up Fenster 53 wählt, wird diese Editieroption 55 zunächst zum Zeichen ihrer Auswahl optisch hervorgehoben, im einfachsten Fall wieder durch farbliche Hervorhebung des Randes 51. Aktiviert der Bediener 24 sodann eine in dem Pop-up Fenster 53 positionierte Schließen-Leiste 56 wird das Pop-up Fenster 53 durch horizontales Herausbewegen 52 aus dem Display 18 wieder geschlossen und zugleich hat die gewählte Editieroption 55 den zuvor ausgewählten untersten Teilbereich 47c des Visualisierungsbereichs "Tool-View" 47 ausgefüllt. Es liegt im Rahmen der Erfindung, dass sich die wählbaren Editieroptionen 54, 55 nicht auf visuelle Aspekte beschränken sondern auch verschiedene Funktionen umfassen können. Zugleich können mehr als die 2 beschriebenen Editieroptionen 54, 55 verfügbar sein, wobei dann ein Navigieren zwischen den wählbaren Editieroptionen 54, 55 durch vertikales Scrollen 35 in dem geöffneten Pop-up Fenster 53 möglich wird.

Ein Wechsel von der ersten Navigationsebene 19 in die weitere Navigationsebene 20 wird nach Auswahl einer gewünschten Arbeitsphase dadurch bewirkt, dass der Bediener 24 einen der Visualisierungsbereiche "Arbeitsphasen-Content" 46 oder "Tool-View" 47 berührt. Findet die Berührung 48 im Bereich eines der auf dem Display 18 visualisierten Ikons 57 statt, öffnet sich unmittelbar die mit dem berührten Ikon 57 verknüpfte Funktion oder Anwendung. Wird ein Bereich zwischen den Ikons 57 berührt, findet nur der Wechsel zwischen den Navigationsebenen 19, 20 statt, ohne dass dies unmittelbar zu einer Änderung der Displaystruktur führt.

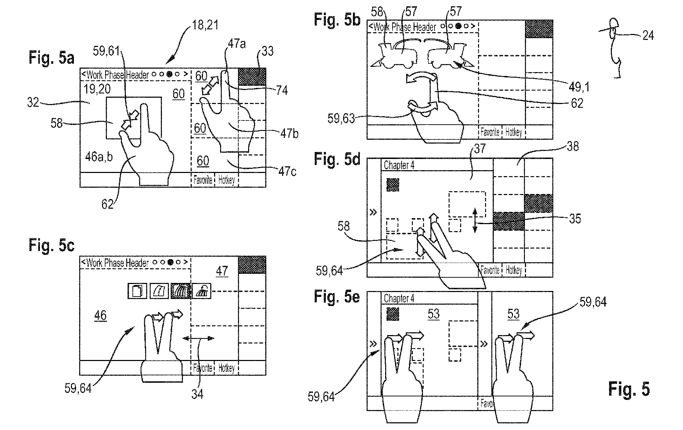

Figur 5 zeigt nun die erfindungsgemäßen und noch näher zu erläuternden Betätigungsszenarien für ein als Touchscreen-Monitor 21 ausgeführtes Display 18. Wie bereits beschrieben, ist das Display 18 innerhalb jeder Navigationsebene 19, 20 in verschiedene Visualisierungsbereiche 32, 33, 37, 38, 46, 47 unterteilt, wobei jedem Visualisierungsbereich 32, 33, 37, 38, 46, 47 eine Vielzahl von Visualisierungsinhalten 58 zugeordnet sein können. Damit nun zwischen den in den verschiedenen Visualisierungsbereichen 32, 33, 37, 38, 46, 47 angezeigten Visualisierungsinhalten 58 zügig navigiert werden kann und/oder die Visualisierungsinhalte 58 auf wesentliches beschränkt und deutlicher sichtbar gemacht werden können, ist vorgesehen, dass die noch näher zu beschreibenden, verfügbaren Touchscreen-Funktionen 59 in einem oder mehreren der Visualisierungsbereiche 32, 33, 37, 38, 46, 47 unabhängig von den übrigen Visualisierungsbereichen 32, 33, 37, 38, 46, 47 anwendbar sind. Sofern ein Visualisierungsbereich 46, 47 gemäß Figur 5a in Anzeigenbereiche 60 unterteilt ist, die im einfachsten Fall mit den bereits beschriebenen Teilbereichen 46a, b; 47a-c der Visualisierungsbereiche "Arbeitsphasen-Content" 46 und "Tool-View" 47 korrespondieren, können auch in diesen Anzeigebereichen 60 die erfindungsgemäßen Touchscreen-Funktionen 59 unabhängig voneinander angewendet werden.

In einem ersten Betätigungsszenario ist die Touchscreen-Funktion 59 als Zoom-Funktion 61 ausgestaltet, wobei jeder der Anzeigebereiche 60 oder jeder Visualisierungsbereich 32, 33, 37, 38, 46, 47 unabhängig von den übrigen Anzeige- oder Visualisierungsbereichen 32, 33, 37, 38, 46, 47, 60 durch den Bediener 24 mittels Zweifingerbedienung gezoomt werden kann. Gemäß Figur 5a.) kann durch Aufeinanderzu- oder Voneinanderwegbewegen der Finger 62, vorzugsweise von Daumen und Zeigefinger, der jeweilige Bildausschnitt vergrößert oder verkleinert werden. Zudem ist es gemäß Figur 5b.) möglich, durch eine kreisförmige Bewegung 63 der Finger 62, ebenfalls vorzugsweise Daumen und Zeigefinger, auf dem Touchscreen-Monitor 21 eine Spiegelung des visualisierten Ikons 57 hervorzurufen, wobei die Darstellung des ursprünglichen Ikons 57 erhalten bleibt. Im dargestellten Ausführungsbeispiel bewirkt diese Spiegelungsfunktion, dass die hier als Feldhäcksler 55 ausgeführte landwirtschaftliche Arbeitsmaschine 1 am Display 18 sowohl rechtsseitig als auch linksseitig abgebildet ist, sodass alle von der jeweiligen Maschinenseite abhängenden Details sichtbar sind.

In einer weiteren Ausgestaltung kann der Touchscreen-Monitor 21 auch so beschaffen sein, dass gemäß den Darstellungen c.) und d.) der Figur 5 eine ziehende Berührung 64 des Displays 18 in horizontaler oder vertikaler Richtung zu einer Erhöhung der Geschwindigkeit des vertikalen oder horizontalen Scrollens 34, 35 führt. In Analogie zu den bereits beschriebenen Touchscreen-Funktionen 59 kann auch das horizontale und vertikale Scrollen 64 wie in Figur 2 am Beispiel des vertikalen Scrollens 35 in den Visualisierungsbereichen 37, 38, 33 der zweiten Navigationsebene 20 gezeigt, unabhängig voneinander in den verschiedensten Visualisierungs- und Anzeigebereichen 32, 33, 37, 38, 46, 47, 60 unabhängig voneinander erfolgen. Gemäß Figur 5e) kann das zweifingrige horizontale Ziehen 64 in den Fällen, wo ein oder mehrere Pop-up Windows 53 geöffnet sind dazu herangezogen werden, dass das in dieser Weise berührte Pop-up Window 53 selbsttätig schließt.

Es liegt im Rahmen der Erfindung, dass die mittels der erfindungsgemäßen Bedien- und Anzeigeeinheit 8 steuerbare landwirtschaftliche Arbeitsmaschine 1 nicht auf eine als Mähdrescher 2 oder Feldhäcksler 49 ausgeführte landwirtschaftliche Arbeitsmaschine 1 beschränkt ist sondern beliebig, etwa als Traktor-Anbaugeräte-Kombination, ausgeführt sein kann. Zudem können die mit der Bedien- und Anzeigeeinheit 8 einstellbaren Parameter 64 von beliebiger Art sein und etwa Maschinenparameter, Qualitätsparameter der landwirtschaftlichen Arbeitsmaschine, Qualitätsparameter des Erntegutes und Erntegutparameter umfassen.

**Bezugszeichenliste:**

| | | | |
|---|---|---|---|
| 1 | landwirtschaftliche Arbeitsmaschine | 31 | Taste "Hotkey" |
| 2 | Mähdrescher | 32 | Visualisierungsbereich "Arbeitsphasen" |
| 3 | Arbeitsaggregat | 33 | Visualisierungsbereich "Tool-Menü" |
| 4 | Schneidwerk | 34 | horizontales Scrollen |
| 5 | Erntegut | 35 | vertikales Scrollen |
| 6 | Förderorgan | 36 | Anzeigefeld |
| 7 | Schrägförderer | 37 | Visualisierungsbereich "Tool-Content" |
| 8 | Bedien- und Anzeigeeinheit | 38 | Visualisierungsbereich "Tool-Submenü" |
| 9 | erste Dreschtrommel | 39 | Bedienelement |
| 10 | zweite Dreschtrommel | 40 | Dreh-Drück-Schalter |
| 11 | Trenneinrichtung | 41 | Escape-Taste |
| 12 | Hordenschüttler | 42 | Vorbereitung |
| 13 | Reinigungseinrichtung | 43 | Straßenfahrt |
| 14 | Gebläse | 44 | Feldfahrt |
| 15 | Reinigungssieb | 45 | Vorgewende |
| 16 | Schwad | 46 | Visualisierungsbereich "Arbeitsphasen-Content" |
| | | | |
| 17 | Kabine | 46a,b | Teilbereich |
| 18 | Display | 47 | Visualisierungsbereich "Tool-View" |
| 19 | erste Navigationsebene | 48 | Berührung |
| 20 | zweite Navigationsebene | 49 | Feldhäcksler |
| 21 | Touchscreen-Monitor | 50 | Werkzeug |
| 22 | erste Bedieneinheit | 51 | Rand |
| 23 | zweite Bedieneinheit | 52 | horizontale Richtung |
| 24 | Bediener | 53 | Pop-up Fenster |
| 25 | Header-Menüleiste | 54, 55 | Editieroption |
| 26 | Anzeigebereich | 56 | Schließen-Leiste |
| 27 | Arbeitsphasen | 57 | Ikon |
| 28 | Anzeigebereich | 58 | Visualisierungsinhalte |
| 29 | Anzeigebereich "Favoriten" | 59 | verfügbare Touchscreen-Funktionen |
| 30 | Anzeigbereich "Hotkey" | 60 | Anzeigebereich |

**Bezugszeichenliste:**

| | |
|---|---|
| 61 | Zoom-Funktion |
| 62 | Finger |
| 63 | kreisförmige Bewegung |
| 64 | ziehende Bewegung |

## Patentansprüche

1. Elektronische Bedien- und Anzeigeeinheit mit zumindest einem einen Touchscreen-Monitor umfassenden Display und wenigstens einer Bedieneinheit, wobei das Display über eine Vielzahl von Visualisierungsinhalte umfassende Visualisierungsbereiche verfügt,
**dadurch gekennzeichnet,**
**dass** der dem Display (18) zugeordnete Touchscreen-Monitor (21) in Visualisierungsbereiche (32, 33, 37, 38, 46, 47) unterteilt ist und die Visualisierungsinhalte (58) jedes Visualisierungsbereichs (32, 33, 37, 38, 46, 47) unabhängig von den Visualisierungsinhalten (58) der übrigen Visualisierungsbereiche (32, 33, 37, 38, 46, 47) mittels verfügbarer Touchscreen-Funktionen (59) editierbar sind.

2. Elektronische Bedien- und Anzeigeeinheit mit zumindest einem einen Touchscreen-Monitor umfassenden Display nach Anspruch 1,
**dadurch gekennzeichnet,**
**dass** ein oder mehrere Visualisierungsbereiche (32, 33, 37, 38, 46, 47) unabhängig von den übrigen Visualisierungsbereichen (32, 33, 37, 38, 46, 47) zoombar sind.

3. Elektronische Bedien- und Anzeigeeinheit mit zumindest einem einen Touchscreen-Monitor umfassenden Display nach einem der vorhergehenden Ansprüche,
**dadurch gekennzeichnet,**
**dass** ein oder mehrere Visualisierungsbereiche (32, 33, 37, 38, 46, 47) eine Vielzahl von visualisierten Ikons (57) umfassen und eine zweifingrige (62) eine kreisförmige Bewegung (63) beschreibende Berührung des Touchscreen-Monitors (21) zu einer spiegelbildlichen Darstellung des jeweiligen Ikons (57) führt, wobei die ursprüngliche Darstellung des Ikons (57) erhalten bleibt.

4. Elektronische Bedien- und Anzeigeeinheit mit zumindest einem einen Touchscreen-Monitor umfassenden Display nach einem der vorhergehenden Ansprüche,
**dadurch gekennzeichnet,**
**dass** ein zweifingeriges horizontales oder vertikales Scrollen (34, 35, 64) des jeweiligen Visualisierungsbereichs (32, 33, 37, 38, 46, 47) eine Erhöhung der Scroll-Geschwindigkeit in dem jeweiligen Visualisierungsbereich (32, 33, 37, 38, 46, 47) bewirkt

5. Elektronische Bedien- und Anzeigeeinheit mit zumindest einem einen Touchscreen-Monitor umfassenden Display nach Anspruch 4,
**dadurch gekennzeichnet,**
**dass** das zweifingerige horizontale oder vertikale Scrollen (34, 35) in gleichzeitig visualisierten Visualisierungsbereichen (32, 33, 37, 38, 46, 47) unabhängig voneinander erfolgt.

6. Elektronische Bedien- und Anzeigeeinheit mit zumindest einem einen Touchscreen-Monitor umfassenden Display nach einem der vorhergehenden Ansprüche,
**dadurch gekennzeichnet,**
**dass** das Display (18) in Navigationsebenen (19, 20) betreibbar ist, wobei das Display (18) innerhalb einer Navigationsebene (19, 20) in Visualisierungsbereiche (32, 33, 37, 38, 46, 47) unterteilt ist und zumindest ein Teil der Visualisierungsbereiche (32, 33, 37, 38, 46, 47) relativ zueinander bewegbar sind, wobei die Bewegbarkeit der Visualisierungsbereiche (32, 33, 37, 38, 46, 47) relativ zueinander ein horizontales und/oder vertikales Scrollen (34 ,35) des jeweiligen Visualisierungsbereiches (32, 33, 37, 38, 46, 47) umfasst.

7. Elektronische Bedien- und Anzeigeeinheit mit zumindest einem einen Touchscreen-Monitor umfassenden Display nach Anspruch 6,
**dadurch gekennzeichnet,**
**dass** das Display (18) in einer ersten Navigationsebene (19) zumindest einen Visualisierungsbereich "Arbeitsphase" (32) und einen Visualisierungsbereich "Tool-Menü" (33) umfasst, wobei der Visualisierungsbereich "Arbeitsphase" (32) horizontal scrollbar (34) und der Visualisierungsbereich "Tool-Menü" (33) vertikal scrollbar (35) ist.

8. Elektronische Bedien- und Anzeigeeinheit mit zumindest einem einen Touchscreen-Monitor umfassenden Display nach Anspruch 6,
**dadurch gekennzeichnet,**
**dass** das Display (18) in einer zweiten Navigationsebene (20) zumindest einen Visualisierungsbereich "Tool Content" (37), einen Visualisierungsbereich "Tool-Menü" (33) sowie einen Visualisierungsbereich "Tool-Submenü" (38) umfasst und alle Visualisierungsbereiche (33, 37, 38) vertikal scrollbar (35) sind.

9. Elektronische Bedien- und Anzeigeeinheit mit zumindest einem einen Touchscreen-Monitor umfassenden Display nach einem der vorhergehenden Ansprüche,
**dadurch gekennzeichnet,**
**dass** ein Berühren eines aktivierten Visualisierungsbereichs (32, 33, 37, 38, 46,47) außerhalb eines den Visualisierungsbereich (32 ,33 ,37, 38, 46,47) beschreibenden Ikons (57) zum Schließen eines aktivierten Anzeigebereichs (60) und/oder Pop-up-Fenster (53) führt und/oder ein Rücksetzen von durchgeführten Änderungen bewirkt.

10. Elektronische Bedien- und Anzeigeeinheit mit zumindest einem einen Touchscreen-Monitor umfassenden Display nach einem der vorhergehenden Ansprüche,
**dadurch gekennzeichnet,**
**dass** die Konfiguration des Displays (18) in zumindest einer der verfügbaren Navigationsebenen (19, 20) editierbar ist.

11. Elektronische Bedien- und Anzeigeeinheit mit zumindest einem einen Touchscreen-Monitor umfassenden Display nach Anspruch 10,
**dadurch gekennzeichnet,**
**dass** in der Navigationsebene (19) die Visualisierungsbereiche (46, 47) eine Vielzahl konfigurierbarer Teilbereiche (46a,b ; 47a-c) umfassen und wobei jeder der Teilbereiche (46a, b ; 47a-c) in der Weise editierbar ist, dass der Inhalt eines in einem Visualisierungsbereich (33) hinterlegten Werkzeugs (50) in einen Teilbereich (46a, b ; 47a-c) ziehbar ist.

12. Elektronische Bedien- und Anzeigeeinheit mit zumindest einem einen Touchscreen-Monitor umfassenden Display nach einem der vorhergehenden Ansprüche,
**dadurch gekennzeichnet,**
**dass** in dem Display (18) ein oder mehrere Pop-up Fenster (53) geöffnet sind und das zweifingrige horizontale Ziehen eines geöffneten Pop-up Fensters (53) das Schließen dieses Pop-up Fensters (53) bewirkt.
